# EUROPEAN PATENT SPECIFICATION

(11) **EP 4 324 693 B1**
(45) Date of publication and mention of the grant of the patent: **04.03.2026**
(21) Application number: 23189452.8
(22) Date of filing: 03.08.2023
(51) Int. Cl.: B60N 2/60

(54) **SUPPORT ASSEMBLY FOR DECORATIVE ELEMENTS ON A VEHICLE SEAT BACKREST, VEHICLE SEAT INCLUDING THE SUPPORT ASSEMBLY AND METHOD OF MANUFACTURING SAID SEAT**
STÜTZANORDNUNG FÜR DEKORATIVE ELEMENTE AN EINER FAHRZEUGSITZRÜCKENLEHNE, FAHRZEUGSITZ MIT DER STÜTZANORDNUNG UND VERFAHREN ZUR HERSTELLUNG DES SITZES
ENSEMBLE SUPPORT POUR ÉLÉMENTS DÉCORATIFS SUR UN DOSSIER DE SIÈGE DE VÉHICULE, SIÈGE DE VÉHICULE COMPRENANT L'ENSEMBLE SUPPORT ET PROCÉDÉ DE FABRICATION DUDIT SIÈGE

(30) Priority: 04.08.2022 ES 202230727
(43) Date of publication of application: 21.02.2024
(73) Proprietor: Seat, S.A., 08760 Martorell (ES)
(72) Inventor: MORENO BARBETA, Alfons, 08760 MARTORELL (ES); MARTINEZ GARCIA, Carlos, 08760 MARTORELL (ES); MUÑOZ MUÑOZ, Luisa, 08760 MARTORELL (ES)
(74) Representative: Pons IP

(56) References cited:
- CN-A- 111 497 710
- JP-A- 2016 159 870
- US-A1- 2018 111 529
- US-B2- 10 406 953
- US-B2- 11 254 249

## Description

The present invention falls within vehicle seats and more specifically relates to a support assembly for decorative elements on the backrests of said seats, as well as to the same vehicle seat that incorporates said support assembly and the method of producing said seat.

### Background of the invention

Within vehicle seats, bucket-type seats are widely known, i.e., a seat the backrest of which is formed by a single upholstered body from the headrest to the waist area, unlike traditional seats that had the headrest differentiated as a body that was visualised upholstered as an independent body and that could be totally or partially separated from the rest of the vehicle seat backrest for its adjustment.

In these bucket-type seats, the incorporation of openings and/or trims implies a problem of tightening the upholstery, which is essential to guarantee its correct fixation and presence, in addition to preventing annoying folds and deformations in the upholstery with its use, which can accelerate its degradation and even breakage.

As can be seen in patent application number CN111497710A, the creation of openings in bucket-type seat backrests can be done using a trim support assembly made up of a through part of the backrest that generates the opening, as well as external trim parts that cover the through part on its front and rear portion in the backrest. This set simply acts as a support for the trims, leaving the tensioning of the upholstery to the fixations in the structure of the same backrest. JP 2016159870 discloses a seat cover having an opening and a bezel which is inserted into the opening of the seat cover.

In this solution, as well as in other similar ones known in the state of the art, the seat must first be upholstered and, subsequently, said trim parts of the opening are assembled. This mounting sequence can modify the tension of the upholstery, introducing additional tensions therein that impair the correct surface finish of the upholstery and favour its deterioration.

Moreover, these known assemblies carry out their fixation by means of specific connection means for connecting to the structure of the vehicle seat, which makes it possible to modify the structure of the seat in a manner that is also specific for said fixation of the trim support assembly.

Therefore, it is necessary to offer an alternative to the state of the art that covers the problems found therein, through the configuration of a support assembly that effectively and safely incorporates trim elements and/or that allows the creation of openings in the seat, ensuring the correct tension of the upholstery.

### Description of the invention

According to a first aspect, the objective of the present invention is to provide a support assembly for decorative elements on the backrests of said seats, as well as, according to a second aspect of the invention, a vehicle seat that includes this support assembly, and, according to a third aspect of the invention, a method of manufacturing said seat, which manage to solve the aforementioned drawbacks, presenting other advantages that will be described below.

Preliminarily, the use of certain terms is to be clarified, so that they are not interpreted in a restrictive manner, or that obvious changes of reference, configuration and/or application may vary the name that has been used in this description without changing the subject matter or essence of the protection.

For this purpose, the front face, part or portion of the backrest or parts of the support assembly must be understood as the one that is located first in the conventional direction of travel of the vehicle, i.e., the one that is contacted by a user, when said user is sitting on the seat. On the contrary, the rear face, part or portion is that which is located in the opposite direction to the conventional direction of travel of the vehicle.

Also previously, reference is made to the conventional configuration of the bucket-type seat, which is formed by a metallic structure, preferably not seen, to give rigidity to the whole, placing a foam on top and, finally, being covered with upholstery. The bucket seat backrest is formed by a single upholstered body from the headrest to the waist area.

In accordance with this objective, according to a first aspect, the present invention is based on a support assembly for decorative elements on a vehicle seat backrest. This support assembly is configured to be installed in a bucket-type backrest, formed by a single upholstered body from the headrest to the waist area, wherein the support assembly has a main body, in turn comprising:
- fixing elements configured and arranged to retain the support assembly to a structure of the seat, and
- receiving elements for receiving trim parts, configured to retain said trim parts in the main body.

The support assembly further comprises the same trim parts that are coupled to the receiving elements of the main body.

Advantageously, the support assembly comprises at least one tightening element for the upholstery, configured and arranged to receive upholstery ends and retain said upholstery ends in the same main body.

The configuration of this support assembly shown makes it possible to carry out the upholstery and tightening of the backrest by means of one part, i.e., the support assembly, with a trim element coupled to said support assembly. The inclusion of at least one tightening element for the upholstery in the same support assembly, which is an auxiliary element for the seat and its structure, to which it is coupled, makes it possible to carry out both the tightening function and the function of supporting and coupling trim elements. This advantage is magnified in the optional configurations that will be shown below, especially in those that form an open window that crosses the backrest from its front face to its rear face. It is clarified that the upholstery is commonly fixed to the structure of the seat backrest by other perimeter areas of said backrest. The present invention introduces a new area for additional tightening in the support assembly, which makes it possible to improve the tightening of the upholstery, improving its visual appearance and extending its useful life without deterioration, by avoiding the formation of folds and wrinkles.

In an optional, although preferred embodiment of the invention, the fixing elements of the support assembly to the seat structure are formed by through-holes in the structure of the main body of the support assembly, wherein these through-holes are configured to be passed through by fixing rods for fixing the headrest to the backrest or seat structure and to adjust the position of the support assembly with respect to the seat structure.

These features of the support assembly allow same to be fixed to the structure of the seat backrest, taking advantage of the conventional headrest rods to pass through through-holes in the support assembly and that said rods come to be coupled to the structure of the seat backrest. This fixing system allows the simple fixing of the support assembly to the seat backrest structure without having to include additional fixing or coupling elements to said structure. Alternatively, other means of fixing the support assembly to the structure of the seat backrest can be provided.

In relation to this fixing system for the support assembly, and according to an embodiment option of the invention, the through-holes have clips configured to anchor the fixing rods for fixing the headrest in teeth and to retain the main body of the support assembly in a predefined position, together with the positioning of the headrest with respect to the backrest. In this way, in the same operation for mounting and retaining the headrest to the seat backrest or structure, the support assembly is additionally fixed and retained in its final assembly position, also allowing an adjustment of the relative position between the aforementioned components.

According to a preferred embodiment of the invention, the main body of the support assembly comprises a front body and a rear body connected to one another, wherein the front body comprises at least the tightening elements for the front portion of the upholstery that covers the backrest and headrest, and the rear body comprises at least the tightening elements for the rear portion of the upholstery that covers the backrest and headrest.

This configuration, by means of the front and rear bodies that are positioned near the front and rear face of the backrest respectively, both connected by a connecting part, makes it possible to have the upholstery tightening elements on the front and rear face of the backrest using the same support assembly. The fixing elements for fixing the assembly to the seat structure are located between these front and rear bodies or located in one of said bodies.

Alternatively one could have a main body with only a front or rear body, simplifying the production process of the main body of the support assembly.

Optionally, although preferably, the invention shows the main body of the support assembly comprising an open window from the front body to the rear body of said main body, said open window corresponding, in the mounting position of the support assembly on the vehicle seat, to an opening from the front face of the backrest to the rear face of the backrest.

This possible embodiment achieves tightening of the upholstery in the open area of the backrest, this open through area corresponding to an opening in the same upholstery, as well as in the coating foam. The support assembly also allows the coupling of the trim parts, which maintain the opening giving a particular appearance to the area, without the need for both features to use additional elements to achieve the described effects.

In an alternative embodiment to the preceding one, the front body and/or the rear body of the main body have their surfaces without openings that generate an open window from the front face of the backrest to the rear face of the backrest.

Although this alternative embodiment does not show the opening in the backrest, there is a configuration of the support assembly in which the front and rear bodies are equally positioned near the front and rear face respectively, both connected by a connecting part, and perform the function of tightening the upholstery and the function of receiving the trims on each face of the vehicle seat.

Optionally, and according to any of the preceding embodiments, the main body comprises, on its front face and/or on its rear face, at least two upholstery tightening elements, wherein at least one of the upholstery tightening elements is located in an upper and/or lateral area of the main body, tightening the upholstery that covers the headrest in a downward direction and/or laterally, and wherein at least one of the upholstery tightening elements is located in a lower and/or lateral area of the main body, tightening the upholstery that covers the backrest in an upward direction and/or laterally.

This positioning of the tightening elements allows the support assembly to carry out this tightening function, both on its front face and on its rear face, in an effective manner, taking the shape of the opening and/or trim to be had on the backrest of the seat.

As an alternative to the foregoing, as another possible option for carrying out the invention, the main body comprises, both on its front face and on its rear face, three upholstery tightening elements, wherein a first upholstery tightening element is located in an upper area of the main body, tightening the upholstery that covers the headrest in a downward direction, wherein a second and third upholstery tightening element are arranged in a lower area of the main body, the second and third tightening elements being on opposite sides in said lower area of the main body, wherein these second and third tightening elements tighten the upholstery that covers the backrest in an upward direction and laterally.

This orientation and position of the tightening elements can alternatively be modified following the shape of the opening to be made in the backrest for the location of the support assembly, wherein the tightening elements are located in the vicinity of the area where the trim will be installed by means of horizontal and/or vertical slots with concave or convex shapes, as well as diagonal slots to generate upward/downward as well as lateral tightening of the upholstery.

According to a preferred embodiment of the invention, each tightening element is formed by an elongated slot made in the surface of the main body into which the end of the upholstery and its fixing tip are inserted.

This allows the fixing and tightening of the upholstery to be carried out directly on the support assembly and not on the structure of the seat backrest, without having to modify this structure according to the particular shape of the trim parts.

Preferably, according to a possible embodiment of the invention, the main body comprises collapsible elements configured and arranged to absorb energy in the event of impacts with an occupant inside the vehicle, the direction and sense of collapse having the direction of advance of the vehicle.

The support assembly is a rigid part, which provides solidity to the retention of the upholstery, but at the same time it collapses in the event of a possible impact of a rear seat occupant against the rear portion of the backrest. The support assembly preferably comprises breakage-controlled areas in order to collapse in the event of an impact of said type, in the form of areas weakened by holes, smaller thicknesses, etc., taking into account that the direction of collapse and impact is the direction of advance of the vehicle. The location of said breakage-controlled areas in the support assembly is of special interest for those situations in which the trajectory of a head of a rear seat occupant may interfere with the support assembly, in the event of frontal impact.

Also preferably, the trim parts, when installed on the main body, completely or mostly cover the areas corresponding to the upholstery tightening elements, the upholstery being inserted into the slot formed between the trim part and the foam of the seat or between the trim part and the main body of the support assembly. In this way, the visual appearance of the backrest is improved, as the vehicle occupant observes only a visible surface of the backrest formed by the upholstery and the trim parts, said upholstery and said trim parts being substantially flush therebetween.

Regarding the trim parts, preferably, they are fixed by a clipping system to the receiving elements of the main body. This allows a simple, safe and fast mounting in the assembly.

According to another optional embodiment of the invention, the main body has a surface for the support of the seat foam that covers the headrest. This support surface provides rigidity to the mounted assembly, so that, when supporting the head of the occupant, there is resistance and comfort.

Preferably, although optionally, the main body is made in a single, monobloc part, which comprises the front body and the rear body as well as the connecting part therebetween, wherein this main body as a single part is the one that is fixed to the structure of the backrest.

This single part is rigid, preferably made of a rigid non-deformable plastic type, although other materials that provide rigidity can be used. This rigidity provides solidity in the retention of the upholstery, maintaining the collapsible characteristics that have been previously described.

Alternatively, the support assembly can have the front and rear bodies mounted as originally independent parts, as well as the connecting part therebetween.

In accordance with the stated objectives, according to a second aspect, the present invention is based on a vehicle seat, wherein the seat comprises a bucket-type backrest, formed by a single upholstered body from the headrest to the waist area, as previously indicated. This seat advantageously comprises, a support assembly as described in the first aspect of the invention described above.

The seat configured in this way, with the inclusion of a support assembly as indicated above in any of its embodiments, allows the upholstered backrest to be upholstered with an open central window or with trims on its front or rear face or on both, creating an opening in the upholstery and allowing its tightening directly against the support assembly. The seat, in this way, can incorporate the trims using simple mounting and the seat allows compliance with the rigorous safety tests, adapting to multiple trim designs and/or possible openings in the backrest.

Preferably, the vehicle seat installs the support assembly in a transition area between the headrest and the shoulder area. Other locations are possible due to the configuration of the support assembly, although it is a preferred location for the headrest and backrest fixing elements.

In a possible embodiment of the backrest, the seat foam coating the backrest and the headrest comprises a hole or cavity in the area where the support assembly is installed, and wherein the upholstery is configured so that its ends fit into the tightening elements of the main body of the support assembly.

The upholstery can, in this way, insert the ends that form the corresponding opening therein, in correspondence with the foam, in the tightening elements of the support assembly installed in the backrest.

In accordance with the stated objectives, according to a third aspect, the present invention also comprises a method of manufacturing a vehicle seat as described in the second aspect of the invention. This method is advantageously defined in that it comprises at least the following steps:
a) Fixing the main body of the support assembly to the structure of the vehicle seat by means of the fixing elements;
b) Placing the foam material on the seat structure and, partially, on the main body;
c) Installing the upholstery, which comprises positioning and fixing the upholstery ends corresponding to the areas where the main body of the support assembly is located to the tightening elements of the upholstery of the main body of the support assembly; and
d) Coupling the trim parts to the main body of the support assembly by means of the receiving elements.

These steps could not be carried out in this order in the state of the art, since the existing trim parts required a first step of upholstering the backrest, assembling them afterwards and, finally, said trim parts were assembled on the structure, with the need to have tightening elements in the seat structure and that the subsequent installation of the trim parts could modify the tightening already carried out. In this way, a direct mounting on the support assembly and an efficient, safe and durable tightening of the upholstery are ensured.

In this regard, preferably, the step of tightening the upholstery is carried out by fixation by inserting arrowheads linked to each of the respective ends of the upholstery, wherein these upholstery ends correspond to the areas where the main body of the support assembly is located, tightening this upholstery in the slots defined by the tightening elements of the upholstery that comprises the main body.

In this way, there is a support assembly for trim elements that is installed on the backrest of a seat, to allow different trim shapes and possible openings in the backrest where the support assembly is installed, all of this taking into account that the tightening of the upholstery is fixed on said support assembly without having to use auxiliary parts or make modifications to the structure of the backrest. This makes it possible to have a seat that includes this support assembly with multiple trim designs and configurations and possible openings, maintaining a safe and long-lasting tightening of the upholstery. In the same way, a manufacturing method is achieved that improves said durability of the tightening and ease for mounting said seat.

### Brief description of the figures

In order to better understand what has been set forth, a number of drawings are attached wherein a practical embodiment is schematically depicted merely by way of non-limiting example.
Figure 1 is a partial front elevation view of a seat backrest in which a support assembly is installed without being covered by the foam or the upholstery.
Figure 2 is a front elevation view of the support assembly without the trims installed and without same being mounted on the seat.
Figures 3a, 3b and 3c show three perspective views of different manufacturing steps of the seat with the installation of the support assembly and its trims.
Figures 4a and 4b show the front and rear elevation views of the mounted seat and with the trims installed.

### Description of a preferred embodiment

Various embodiments of the invention are described below, in a non-limiting manner thereof, for a better understanding of the features indicated.

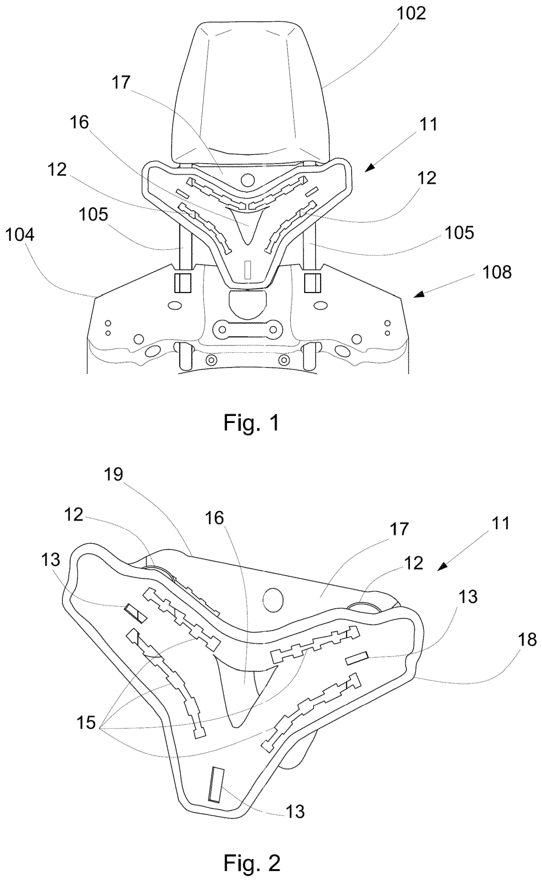

According to a preferred embodiment of the invention and as can be seen in figures 1 to 3, a support assembly (10) for trim elements (14) on seat (100) backrests (101) is arranged formed by a main body (11) that is fixed to the backrest (101) of the seat (100), comprising a front body (18) and a rear body (19) by way of surfaces that remain on the front face of the seat (106) and on the rear face of the seat (107), said bodies (18 and 19) being connected to one another to form a joint part. In the present embodiment, the main body (11) is made up of a single part, although alternatively a main body (11) made up of different parts coupled to one another could be used.

The main body (11) is installed, in the present embodiment, in the transition area between the headrest (102) and the shoulder area of the backrest (101) of a seat (100) backrest (101) that is of the bucket-type, i.e., formed by a single upholstered body from the headrest (102) to the waist area (103).

For fixing the support assembly (10) to the structure (104) of the backrest (101) of the seat (100), the support assembly (10) has fixing elements (12) formed by through-holes, by way of cylinders or the like, located in the main body, to be passed through by the fixing rods (105) for fixing the headrests (102) on the backrest (101), leaving the support assembly (10) fixed between the rods (105) of the headrest (102) and the structure (104) of the backrest (100).

These fixing elements (12) by way of through-holes comprise clips or similar elements for the anchoring of teeth in the rods (105) allowing the adjustment of the position of the main body (11) with respect to the headrest (102) prior to its upholstery. Additionally, and not shown in the figures, the structure (104) of the seat (100) comprises respective holes for anchoring the teeth of the rods (105) allowing the adjustment of the position of the headrest (102) with respect to said structure (104) prior to its upholstery. Therefore, the relative position in the vertical mounting direction between the main body (11), headrest (102) and structure (104) components can be easily adjusted according to requirements and without adding additional components.

As can be seen in detail in Figures 1 and 2, the surfaces of the front (18) and rear (19) bodies of the main body (11) of the support assembly (10) comprise, on each of their faces corresponding to their front or rear position, tightening elements (15) of the upholstery used to cover the bucket-type backrest, as well as receiving elements (13) for receiving trim parts (14), configured to retain said trim parts (14).

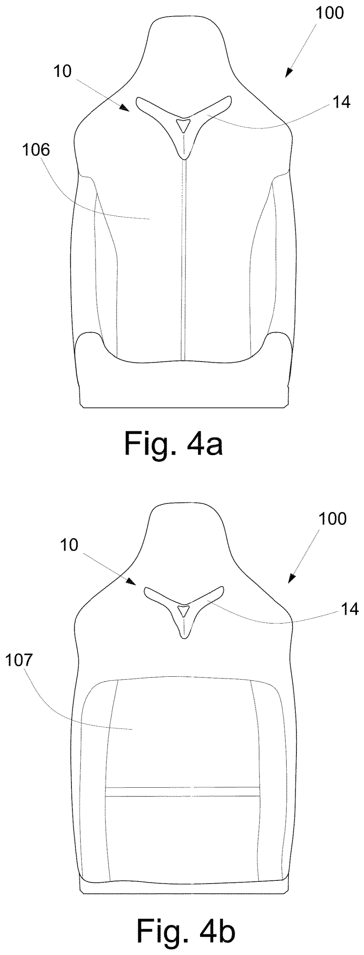

In the present embodiment, both the support assembly (10) and the seat foam, as well as the upholstery define an open window (16) that goes from the front body (18) to the rear body (19) of the main body (11), which creates an opening from the front face (106) of the backrest (101) to the rear face (107) of the backrest (101), as can be seen in figures 4a and 4b.

This can be replaced in other embodiments by trim parts (14) on one or both sides of the backrest (101) without an open window (16), the main body (11) having a front body (18) and/or a rear body (19) for receiving the upholstery and its tightening in the tightening elements (15), as well as for receiving the trim parts (14).

The main body (11) has on the outer surfaces of the front body (18) and on its rear body (19) three upholstery tightening elements (15), wherein a first upholstery tightening element (15) is located in an upper area of the main body (11) tightening the upholstery that covers the headrest (102) in a downward direction, wherein a second and a third upholstery tightening element (15) are arranged in a lower area of the main body (11), the second and third tightening elements (15) being on opposite sides in said lower area of the main body (11), arranged symmetrically with respect to one another according to a substantially central vertical axis, wherein these second and third tightening elements (15) tighten the upholstery that covers the backrest (101) in an upward direction and laterally.

This configuration can alternatively be modified according to the design of the trim part (14) and the effect to be given to the backrest (101), being able to change the position and orientation of the tightening elements, which can be located in the vicinity of the area where the trim part (14) will be installed by means of horizontal and/or vertical slots with concave or convex shapes, as well as diagonal slots to generate upward/downward as well as lateral tightening of the upholstery in a manner analogous and alternative to the configuration of the indicated preferred embodiment.

These tightening elements (15) are arranged, regardless of their geometry, in areas close to the ends of the main body (11), specifically in the areas close to the ends of the main body (11) that come into contact with the foam of the seat (100). In this way, the tightening will occur in areas that are very close to the perimeter ends of the foam that define the opening or hole that houses the support assembly (10), so that the appearance of folds or wrinkles in said areas is minimised, obtaining a high visual quality in the transition area between the upholstery and the trim parts (14).

These tightening elements (15) are formed in the present embodiment by elongated slots made on the surfaces of the front (18) and rear (19) bodies of the main body (11) of the support assembly (10), wherein the end of the upholstery that is formed in the cut-out for the location of the trim part (14) and in this case of the open window (16) is introduced.

In the present embodiment, the support assembly (10) is made of a rigid plastic material that allows a firm and secure coupling to the structure (104) of the backrest (101) of the seat (100).

This composition of the support assembly (10) can alternatively be varied by other compositions as long as its rigidity, described features and the collapsibility of the part are ensured.

In the present embodiment, the main body (11) comprises collapsible elements configured and arranged to absorb energy in the event of impacts with an occupant inside the vehicle, the direction and sense of collapse having the direction of advance of the vehicle. In this case, there are breakage-controlled areas in order to collapse in the event of an impact of said type, in the form of areas weakened by holes, smaller thicknesses, etc., not represented in the figures.

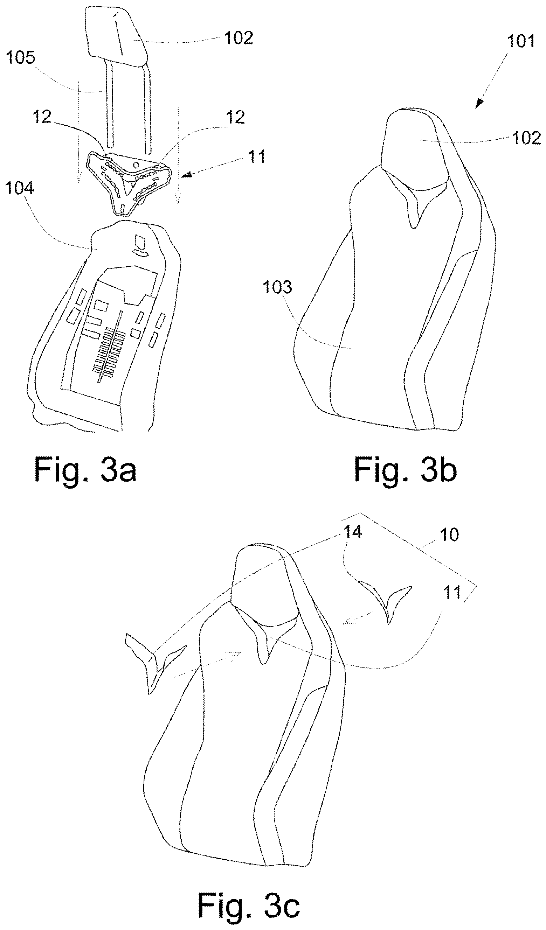

In the present embodiment, there are two trim parts (14), as can be seen in figures 3c and 4, one to be installed on the front face (106) and the other to be installed on the rear face (107) of the backrest (101) and which are clipped to the front body (18) and to the rear body (19) respectively, by means of the receiving elements (13). Its dimensioning and relative position is configured such that the trim parts (14), by being installed on the main body (11) completely cover the areas corresponding to the upholstery tightening elements (15). A visual effect is sought in that the visible mouldings of the trims (14) are arranged flush with the upholstery. Said upholstery extends below the trims (14) until it is fixed in the respective tightening elements (15). In this way, an observer inside the vehicle will only see a seat (100) with upholstery and trims (14) on its front and rear faces and, optionally, will be able to see an opening (16). It is noted that the main body (11) is not visible in the final mounting situation of the seat (100) of the present invention.

In the present embodiment, the main body (11) also has a surface (17) located in the front body (18) for supporting the foam that covers the headrest (102). This element can be removed in alternative embodiments without modifying the rest of the proposed embodiment and its alternatives. Said surface (17) provides rigidity to the transition area between the headrest (102) and the main body (11), being covered by the foam of the seat (100). Thus, when faced with external pressure exerted on the foam by a user, the behaviour is homogeneous with the area of the headrest (102), without the foam yielding or collapsing under said pressure.

In relation to the method of manufacturing or assembling the seat (100), according to a first assembly step shown in Figure 3a, the fixing of the support assembly (10) to the structure (104) of the seat (100) is carried out by means of anchoring in the position defined by the rods of the headrest (102) in the structure (104) of the backrest (101) of the seat (100). Thus, the support assembly (10) is positioned on the rods of the headrests (102). Subsequently, said rods of the headrest (102) are inserted into the structure (104) of the backrest (101), so that the support assembly (10) is positioned between the headrest (102) and the structure (104) of the backrest (101).

Subsequently, in a second assembly step shown in Figure 3b, the foam is mounted covering most of the structure (104) of the backrest (101), maintaining in this case the desired opening in the backrest (101) so that the support assembly (10) is located in said opening in the foam.

Figure 3b shows the seat with the upholstery already mounted, coating the seat foam. Importantly, the step of placing the upholstery is carried out by sliding from the upper area to the lower area, placing same on the headrest (102) and the backrest (101) so that the openings made in the upholstery, corresponding to the area of the main body (11), are directly fixed and tightened on said main body (11) in the tightening elements (15). The conventional mechanism is by means of arrowheads, which are inserted into these channels of the tightening elements (15) and retained.

Finally, Figure 3c shows the third assembly step, wherein the mounting by clipping the trim parts (14) onto the receiving elements (13) of the main body (11) is represented.

Despite the fact that reference has been made to a specific embodiment of the invention, it is obvious for an expert in the field that the support assembly for trim parts in vehicle seats, as well as the vehicle seat that includes same and the manufacturing method thereof being described are susceptible to numerous variations and modifications, and that all the details mentioned can be replaced by other technically equivalent ones, without departing from the scope of protection as defined by the attached claims.

## Claims

1. A support assembly for decorative elements on a vehicle seat backrest, wherein the support assembly (10) is configured to be installed on a bucket-type backrest (101), formed by a single upholstered body from the headrest (102) to the waist area (103), and wherein the support assembly (10) has a main body (11), which in turn comprises:
- fixing elements (12) configured and arranged to retain the support assembly (10) to a structure (104) of the seat (100), and
- receiving elements (13) for receiving trim parts (14), configured to retain said trim parts in the main body (11),
the support assembly (10) further comprising the same trim parts (14) that are coupled to the receiving elements (13) of the main body (11);
**characterised in that** the support assembly (10) comprises at least one tightening element (15) for tightening the upholstery, configured and arranged to receive ends of the upholstery and retain said ends of the upholstery in the same main body (11).

2. The support assembly, according to claim 1, wherein the fixing elements (12) for fixing the support assembly (10) to the structure (104) of the seat (100) are formed by through-holes in the structure of the main body (11) of the support assembly (10), wherein these through-holes are configured to be passed through by fixing rods (105) for fixing the headrest (102) to the backrest (101) or structure (104) of the seat (100) and to adjust the position of the support assembly (10) with respect to the structure (104) of the seat (100).

3. The support assembly, according to any of the preceding claims, wherein the main body (11) of the support assembly (10) comprises a front body (18) and a rear body (19) connected to one another, wherein the front body (18) comprises at least the tightening elements (15) for tightening the front portion (106) of the upholstery that covers the backrest (101) and headrest (102) and the rear body (19) comprises at least the tightening elements (15) for tightening the rear portion (107) of the upholstery that covers the backrest (101) and headrest (102).

4. The support assembly, according to claim 3, wherein the main body (11) of the support assembly (10) comprises an open window (16) from the front body (18) to the rear body (19) of said main body (11), said open window (16) corresponding, in the mounting position of the support assembly (10) on the seat (100) of the vehicle, to an opening from the front face (106) of the backrest (101) to the rear face (107) of the backrest (101).

5. The support assembly, according to claim 3, wherein the front body (18) and/or the rear body (19) of the main body (11) have their surfaces without openings that generate an open window from the front face (106) of the backrest (100) to the rear face (107) of the backrest (101).

6. The support assembly, according to any of the preceding claims, wherein the main body (11) comprises, on its front face and/or on its rear face, at least two upholstery tightening elements (15), wherein at least one of the upholstery tightening elements (15) is located in an upper and/or lateral area of the main body (11) tightening the upholstery that covers the headrest (102) in a downward direction and/or laterally, and wherein at least one of the upholstery tightening elements (15) is located in a lower and/or lateral area of the main body (11) tightening the upholstery that covers the backrest (101) in an upward direction and/or laterally.

7. The support assembly, according to any of the preceding claims, wherein each tightening element (15) is formed by an elongated slot made on the surface of the main body (11) into which the end of the upholstery and its fixing tip are inserted.

8. The support assembly, according to any of the preceding claims, wherein the main body (11) comprises collapsible elements configured and arranged to absorb energy in the event of impacts with an occupant inside the vehicle, the direction and sense of collapse having the direction of advance of the vehicle.

9. The support assembly, according to claim 1, wherein the trim parts (14), when installed on the main body (11), completely or mostly cover the areas corresponding to the upholstery tightening elements (15), the upholstery being inserted into the slot formed between the trim part (14) and the foam of the seat (100) or between the trim part (14) and the main body (11) of the support assembly (10).

10. The support assembly, according to claim 1 or 9, wherein the trim parts (14) are fixed by a clipping system to the receiving elements (13) of the main body (11).

11. The support assembly, according to any of the preceding claims, wherein the main body (11) is made in a single monobloc part comprising the front body (18) and the rear body (19) as well as the connecting part therebetween, wherein this main body (11) as a single part is that which is being fixed to the structure (104) of the backrest (101).

12. A vehicle seat, wherein the seat comprises a bucket-type backrest (101), formed by a single upholstered body from the headrest (102) to the waist area (103), **characterised in that** the backrest (101) comprises a support assembly (10) as described in any of claims 1 to 11.

13. The vehicle seat, according to claim 12, wherein the support assembly (10) is installed in a transition area between the headrest (102) and the shoulder area (108).

14. A method of manufacturing a vehicle seat as described in claims 12 to 13, **characterised in that** the manufacturing method comprises at least the following steps:
e) Fixing the main body (11) of the support assembly (10) to the structure (104) of the seat (100) of the vehicle by means of the fixing elements (12);
f) Placing the foam material on the structure (104) of the seat (100) and, partially, on the main body (11);
g) Installing the upholstery, which comprises positioning and fixing the ends of the upholstery corresponding to the areas where the main body (11) of the support assembly (10) is located to the upholstery tightening elements (15) of the main body (11) of the support assembly (10); and
h) Coupling the trim parts (14) to the main body (11) of the support assembly (10) by means of the receiving elements (13).

15. The method of manufacturing a vehicle seat, according to claim 14, wherein the tightening of the upholstery is carried out by fixation by inserting arrowheads linked to each of the respective ends of the upholstery, wherein these upholstery ends correspond to the areas where the main body (11) of the support assembly (10) is located, tightening this upholstery in the slots defined by the tightening elements (15) of the upholstery that comprises the main body (11).

## Patentansprüche

1. Stützanordnung für dekorative Elemente an einer Fahrzeugsitzrückenlehne, wobei die Stützanordnung (10) konfiguriert ist, um an einer schalenartigen Rückenlehne (101), die mittels eines einzigen gepolsterten Körpers von der Kopfstütze (102) zu dem Taillenbereich (103) ausgebildet ist, installiert zu werden, und wobei die Stützanordnung (10) einen Hauptkörper (11) aufweist, der wiederum umfasst:
- Befestigungselemente (12), die konfiguriert und eingerichtet sind, um die Stützanordnung (10) an einer Struktur (104) des Sitzes (100) zu halten, und
- Aufnahmeelemente (13) zum Aufnehmen von Verkleidungsteilen (14), die konfiguriert sind, um die Verkleidungsteile in dem Hauptkörper (11) zu halten,
die Stützanordnung (10) ferner umfassend die gleichen Verkleidungsteile (14), die mit den Aufnahmeelemente (13) des Hauptkörpers (11) gekoppelt sind;
**dadurch gekennzeichnet, dass** die Stützanordnung (10) mindestens ein Spannelement (15) zum Spannen der Polsterung umfasst, das konfiguriert und eingerichtet ist, um Enden der Polsterung aufzunehmen und die Enden der Polsterung in dem gleichen Hauptkörper (11) zu halten.

2. Stützanordnung nach Anspruch 1, wobei die Befestigungselemente (12) zum Befestigen der Stützanordnung (10) an der Struktur (104) des Sitzes (100) mittels Durchgangsbohrungen in der Struktur des Hauptkörpers (11) der Stützanordnung (10) ausgebildet sind, wobei diese Durchgangsbohrungen konfiguriert sind, um mittels Befestigungsstangen (105) zum Befestigen der Kopfstütze (102) an der Rückenlehne (101) oder Struktur (104) des Sitzes (100) durchdrungen zu werden und um die Position der Stützanordnung (10) in Bezug auf die Struktur (104) des Sitzes (100) einzustellen.

3. Stützanordnung nach einem der vorstehenden Ansprüche, wobei der Hauptkörper (11) der Stützanordnung (10) einen vorderen Körper (18) und einen hinteren Körper (19), die miteinander verbunden sind, umfasst, wobei der vordere Körper (18) mindestens die Spannelemente (15) zum Spannen des vorderen Abschnitts (106) der Polsterung umfasst, die die Rückenlehne (101) und die Kopfstütze (102) bedeckt, und der hintere Körper (19) mindestens die Spannelemente (15) zum Spannen des hinteren Abschnitts (107) der Polsterung umfasst, die die Rückenlehne (101) und die Kopfstütze (102) bedeckt.

4. Stützanordnung nach Anspruch 3, wobei der Hauptkörper (11) der Stützanordnung (10) ein offenes Fenster (16) von dem vorderen Körper (18) zu dem hinteren Körper (19) des Hauptkörpers (11) umfasst, wobei das offene Fenster (16), in der Montageposition der Stützanordnung (10) an dem Sitz (100) des Fahrzeugs, einer Öffnung von der vorderen Fläche (106) der Rückenlehne (101) zu der hinteren Fläche (107) der Rückenlehne (101) entspricht.

5. Stützanordnung nach Anspruch 3, wobei der vordere Körper (18) und/oder der hintere Körper (19) des Hauptkörpers (11) ihre Oberflächen ohne Öffnungen aufweisen, die ein offenes Fenster von der vorderen Fläche (106) der Rückenlehne (100) zu der hinteren Fläche (107) der Rückenlehne (101) erzeugen.

6. Stützanordnung nach einem der vorstehenden Ansprüche, wobei der Hauptkörper (11), an seiner vorderen Fläche und/oder an seiner hinteren Fläche, mindestens zwei Polsterungsspannelemente (15) umfasst, wobei sich mindestens eines der Polsterungsspannelemente (15) in einem oberen und/oder seitlichen Bereich des Hauptkörpers (11) befindet, wobei die Polsterung, die die Kopfstütze (102) bedeckt, in einer Abwärtsrichtung und/oder seitlich gespannt wird, und wobei sich mindestens eines der Polsterungsspannelemente (15) in einem unteren und/oder seitlichen Bereich des Hauptkörpers (11) befindet, wobei die Polsterung, die die Rückenlehne (101) bedeckt, in einer Aufwärtsrichtung und/oder seitlich gespannt wird.

7. Stützanordnung nach einem der vorstehenden Ansprüche, wobei jedes Spannelement (15) mittels eines länglichen Schlitzes, der an der Oberfläche des Hauptkörpers (11) hergestellt ist, ausgebildet ist, in den das Ende der Polsterung und ihre Befestigungsspitze eingeführt werden.

8. Stützanordnung nach einem der vorstehenden Ansprüche, wobei der Hauptkörper (11) zusammenklappbare Elemente umfasst, die konfiguriert und eingerichtet sind, um Energie im Falle von Aufprallen mit einem Insassen innerhalb des Fahrzeugs zu absorbieren, wobei die Richtung und der Sinn eines Zusammenklappens die Vorwärtsbewegungsrichtung des Fahrzeugs aufweisen.

9. Stützanordnung nach Anspruch 1, wobei die Verkleidungsteile (14), wenn sie an dem Hauptkörper (11) installiert sind, die Bereiche, die den Polsterungsspannelementen (15) entsprechen, vollständig oder größtenteils abdecken, wobei die Polsterung in den Schlitz, der zwischen dem Verkleidungsteil (14) und dem Schaumstoff des Sitzes (100) oder zwischen dem Verkleidungsteil (14) und dem Hauptkörper (11) der Stützanordnung (10) ausgebildet ist, eingeführt wird.

10. Stützanordnung nach Anspruch 1 oder 9, wobei die Verkleidungsteile (14) mittels eines Klemmsystems an den Aufnahmeelementen (13) des Hauptkörpers (11) befestigt sind.

11. Stützanordnung nach einem der vorstehenden Ansprüche, wobei der Hauptkörper (11) in einem einzigen Monoblockteil hergestellt ist, umfassend den vorderen Körper (18) und den hinteren Körper (19) sowie das Verbindungsteil dazwischen, wobei dieser Hauptkörper (11) als ein einziges Teil das ist, das an der Struktur (104) der Rückenlehne (101) befestigt wird.

12. Fahrzeugsitz, wobei der Sitz eine schalenartige Rückenlehne (101) umfasst, die mittels eines einzigen gepolsterten Körpers von der Kopfstütze (102) zu dem Taillenbereich (103) ausgebildet ist, **dadurch gekennzeichnet, dass** die Rückenlehne (101) eine Stützanordnung (10) umfasst, wie in einem der Ansprüche 1 bis 11 beschrieben.

13. Fahrzeugsitz nach Anspruch 12, wobei die Stützanordnung (10) in einem Übergangsbereich zwischen der Kopfstütze (102) und dem Schulterbereich (108) installiert ist.

14. Verfahren zum Fertigen eines Fahrzeugsitzes, wie in den Ansprüchen 12 bis 13 beschrieben, **dadurch gekennzeichnet, dass** das Fertigungsverfahren mindestens die folgenden Schritte umfasst:
e) Befestigen des Hauptkörpers (11) der Stützanordnung (10) an der Struktur (104) des Sitzes (100) des Fahrzeugs mithilfe der Befestigungselemente (12);
f) Platzieren des Schaumstoffmaterials an der Struktur (104) des Sitzes (100) und teilweise an dem Hauptkörper (11);
g) Installieren der Polsterung, umfassend ein Positionieren und das Befestigen der Enden der Polsterung, die den Bereichen entsprechen, wo sich der Hauptkörper (11) der Stützanordnung (10) befindet, an den Polsterungsspannelementen (15) des Hauptkörpers (11) der Stützanordnung (10); und
h) Koppeln der Verkleidungsteile (14) mit dem Hauptkörper (11) der Stützanordnung (10) mithilfe der Aufnahmeelemente (13).

15. Verfahren zum Fertigen eines Fahrzeugsitzes nach Anspruch 14, wobei das Spannen der Polsterung mittels einer Fixierung mittels eines Einführens von Pfeilspitzen, die mit jedem der jeweiligen Enden der Polsterung verknüpft sind, durchgeführt wird, wobei diese Polsterungsenden den Bereichen entsprechen, wo sich der Hauptkörper (11) der Stützanordnung (10) befindet, wobei diese Polsterung in den Schlitzen gespannt wird, die mittels der Spannelemente (15) der Polsterung definiert sind, die den Hauptkörper (11) umfasst.

## Revendications

1. Ensemble support pour éléments décoratifs sur un dossier de siège de véhicule, dans lequel l'ensemble support (10) est conçu pour être installé sur un dossier de type baquet (101), formé par un seul corps rembourré depuis l'appui-tête (102) jusqu'à la zone de taille (103), et dans lequel l'ensemble support (10) a un corps principal (11), qui comprend à son tour :
- des éléments de fixation (12) conçus et agencés pour retenir l'ensemble support (10) à une structure (104) du siège (100), et
- des éléments de réception (13) permettant de recevoir des parties de garniture (14), conçus pour retenir lesdites parties de garniture dans le corps principal (11),
l'ensemble support (10) comprenant en outre les mêmes parties de garniture (14) qui sont accouplées aux éléments de réception (13) du corps principal (11) ;
**caractérisé en ce que** l'ensemble support (10) comprend au moins un élément de serrage (15) permettant de serrer le rembourrage, conçu et agencé pour recevoir des extrémités du rembourrage et retenir lesdites extrémités du rembourrage dans le même corps principal (11).

2. Ensemble support, selon la revendication 1, dans lequel les éléments de fixation (12) permettant de fixer l'ensemble support (10) à la structure (104) du siège (100) sont formés par des trous traversants dans la structure du corps principal (11) de l'ensemble support (10), dans lequel ces trous traversants sont conçus pour être traversés par des tiges de fixation (105) permettant de fixer l'appui-tête (102) au dossier (101) ou à la structure (104) du siège (100) et pour régler la position de l'ensemble support (10) par rapport à la structure (104) du siège (100).

3. Ensemble support, selon l'une quelconque des revendications précédentes, dans lequel le corps principal (11) de l'ensemble support (10) comprend un corps avant (18) et un corps arrière (19) reliés l'un à l'autre, dans lequel le corps avant (18) comprend au moins les éléments de serrage (15) permettant de serrer la portion avant (106) du rembourrage qui recouvre le dossier (101) et l'appui-tête (102) et le corps arrière (19) comprend au moins les éléments de serrage (15) permettant de serrer la portion arrière (107) du rembourrage qui recouvre le dossier (101) et l'appui-tête (102).

4. Ensemble support, selon la revendication 3, dans lequel le corps principal (11) de l'ensemble support (10) comprend une fenêtre ouverte (16) depuis le corps avant (18) jusqu'au corps arrière (19) dudit corps principal (11), ladite fenêtre ouverte (16) correspondant, dans la position de montage de l'ensemble support (10) sur le siège (100) du véhicule, à une ouverture depuis la face avant (106) du dossier (101) jusqu'à la face arrière (107) du dossier (101).

5. Ensemble support, selon la revendication 3, dans lequel le corps avant (18) et/ou le corps arrière (19) du corps principal (11) ont leurs surfaces sans ouvertures qui génèrent une fenêtre ouverte depuis la face avant (106) du dossier (100) jusqu'à la face arrière (107) du dossier (101).

6. Ensemble support, selon l'une quelconque des revendications précédentes, dans lequel le corps principal (11) comprend, sur sa face avant et/ou sur sa face arrière, au moins deux éléments de serrage de rembourrage (15), dans lequel au moins l'un des éléments de serrage de rembourrage (15) est situé dans une zone supérieure et/ou latérale du corps principal (11) serrant le rembourrage qui recouvre l'appui-tête (102) dans une direction vers le bas et/ou latéralement, et dans lequel au moins l'un des éléments de serrage de rembourrage (15) est situé dans une zone inférieure et/ou latérale du corps principal (11) serrant le rembourrage qui recouvre le dossier (101) dans une direction vers le haut et/ou latéralement.

7. Ensemble support, selon l'une quelconque des revendications précédentes, dans lequel chaque élément de serrage (15) est formé par une fente allongée réalisée sur la surface du corps principal (11) dans laquelle l'extrémité du rembourrage et sa pointe de fixation sont insérées.

8. Ensemble support, selon l'une quelconque des revendications précédentes, dans lequel le corps principal (11) comprend des éléments rétractables conçus et agencés pour absorber de l'énergie en cas d'impacts avec un occupant à l'intérieur du véhicule, la direction et la sensation de rétraction ayant la direction d'avancement du véhicule.

9. Ensemble support, selon la revendication 1, dans lequel les parties de garniture (14), lorsqu'elles sont installées sur le corps principal (11), recouvrent complètement ou en grande partie les zones correspondant aux éléments de serrage de rembourrage (15), le rembourrage étant inséré dans la fente formée entre la partie de garniture (14) et la mousse du siège (100) ou entre la partie de garniture (14) et le corps principal (11) de l'ensemble support (10).

10. Ensemble support, selon la revendication 1 ou 9, dans lequel les parties de garniture (14) sont fixées par un système de clipsage aux éléments de réception (13) du corps principal (11).

11. Ensemble support, selon l'une quelconque des revendications précédentes, dans lequel le corps principal (11) est réalisé en une seule partie monobloc comprenant le corps avant (18) et le corps arrière (19) ainsi que la partie de liaison entre eux, dans lequel ce corps principal (11) en tant qu'une seule partie est celui qui est fixé à la structure (104) du dossier (101).

12. Siège de véhicule, dans lequel le siège comprend un dossier de type baquet (101), formé par un seul corps rembourré depuis l'appui-tête (102) jusqu'à la zone de taille (103), **caractérisé en ce que** le dossier (101) comprend un ensemble support (10) tel que décrit dans l'une quelconque des revendications 1 à 11.

13. Siège de véhicule, selon la revendication 12, dans lequel l'ensemble support (10) est installé dans une zone de transition entre l'appui-tête (102) et la zone des épaules (108).

14. Procédé de fabrication d'un siège de véhicule tel que décrit dans les revendications 12 à 13, **caractérisé en ce que** le procédé de fabrication comprend au moins les étapes suivantes :
e) fixation du corps principal (11) de l'ensemble support (10) à la structure (104) du siège (100) du véhicule au moyen des éléments de fixation (12) ;
f) placement du matériau en mousse sur la structure (104) du siège (100) et, partiellement, sur le corps principal (11) ;
g) installation du rembourrage, qui comprend le positionnement et la fixation des extrémités du rembourrage correspondant aux zones où le corps principal (11) de l'ensemble support (10) est situé aux éléments de serrage de rembourrage (15) du corps principal (11) de l'ensemble support (10) ; et
h) accouplement des parties de garniture (14) au corps principal (11) de l'ensemble support (10) au moyen des éléments de réception (13).

15. Procédé de fabrication d'un siège de véhicule, selon la revendication 14, dans lequel le serrage du rembourrage est effectué par fixation en insérant des pointes de flèches liées à chacune des extrémités respectives du rembourrage, dans lequel ces extrémités de rembourrage correspondent aux zones où le corps principal (11) de l'ensemble support (10) est situé, serrant ce rembourrage dans les fentes définies par les éléments de serrage (15) du rembourrage qui comprend le corps principal (11).
